# EUROPEAN PATENT SPECIFICATION

(11) **EP 2 899 910 B1**
(45) Date of publication and mention of the grant of the patent: **14.12.2016**
(21) Application number: 12886218.2
(22) Date of filing: 09.10.2012
(51) Int. Cl.: H04L 1/00, H04L 1/20, H04L 1/18

(54) **SENDING TERMINAL MODULATION ADJUSTING METHOD AND DEVICE, AND SENDING TERMINAL**
VERFAHREN UND VORRICHTUNG ZUR EINSTELLUNG EINER SENDEENDGERÄTMODULATION UND SENDEENDGERÄT
PROCÉDÉ ET DISPOSITIF D'AJUSTEMENT DE MODULATION D'UN TERMINAL D'ENVOI ET TERMINAL D'ENVOI

(43) Date of publication of application: 29.07.2015
(73) Proprietor: Huawei Technologies Co., Ltd., Longgang District Shenzhen, Guangdong 518129 (CN)
(72) Inventor: SHI, Cao, Shenzhen Guangdong 518129 (CN)
(74) Representative: Gill Jennings & Every LLP
(86) International application number: PCT/CN2012/082636
(87) International publication number: WO 2014/056147

(56) References cited:
- CN-A- 1 976 535
- CN-A- 101 110 635
- JP-A- 2008 109 664
- US-A1- 2008 244 350
- US-A1- 2010 284 454

## Description

### TECHNICAL FIELD

Embodiments of the present invention relate to communications technologies, and in particular, to a transmit end modulation adjustment method and apparatus, and a transmit end.

### BACKGROUND

With the continuous development of communications technologies, users have higher expectations and requirements on data transmission. High efficiency and reliability are two most basic requirements of users on data transmission.

In a communications system, a bit bearer capability of a channel is related to a signal-to-noise ratio (Signal-to-Noise Ratio, SNR for short). When noise in the channel increases, a decrease of the SNR may be caused, so that the bit bearer capability of the channel decreases. In a dynamic channel adaptive modulation technology of the prior art, a receive end estimates an SNR of a channel, and feeds back a result of the estimating to a transmit end, so that the transmit end adjusts a modulation parameter. However, an SNR estimation of the channel by the receive end is not accurate and cannot accurately reflect a variation situation of noise. Therefore, an effect of modulation adjustment performed by the transmit end based on a result of the SNR estimation of the channel by the receive end is poor.

US2010/284454A1 discloses a method for transmitting information. The method includes receiving information to be transmitted, the information includes at least one codeword, encoding the at least one codeword, and transmitting the encoded at least one codeword. The encoding is based on a measurement of a channel being used to transmit the information.

### SUMMARY

Embodiments of the present invention provide a transmit end modulation adjustment method and apparatus, and a transmit end, so as to achieve accurate dynamic adjustment of a modulation parameter at the transmit end, and improve a transmission effect of a communications system.

According to a first aspect, an embodiment of the present invention provides a transmit end modulation adjustment method, including:
determining a retransmission request rate of each group of subchannels according to a retransmission request received through at least two groups of subchannels, determining at least one group of subchannels whose retransmission request rate is not a hundred percent, and determining noise variation information according to an initial signal-to-noise ratio margin of the at least one group of subchannels, where each group of subchannels includes at least one subchannel, and the initial signal-to-noise ratio margin of each group of subchannels is different from that of each other group of subchannels; and
adjusting a signal-to-noise ratio margin of each group of subchannels according to the noise variation information.

In a first possible implementation manner, the determining noise variation information according to an initial signal-to-noise ratio margin of the at least one group of subchannels is specifically:
generating the noise variation information according to a smallest initial signal-to-noise ratio margin in the initial signal-to-noise ratio margin of the at least one group of subchannels; and
correspondingly, the adjusting a signal-to-noise ratio margin of each group of subchannels according to the noise variation information is specifically:
   increasing the signal-to-noise ratio margin of each group of subchannels according to the noise variation information.

With reference to the first possible implementation manner of the first aspect, in a second possible implementation manner, the generating the noise variation information according to the smallest initial signal-to-noise ratio margin in the initial signal-to-noise ratio margin of the at least one group of subchannels is specifically:
determining that the smallest initial signal-to-noise ratio margin in the initial signal-to-noise ratio margin of the at least one group of subchannels is the noise variation information; or
determining a proportion coefficient according to a retransmission request rate of a group of subchannels with the smallest initial signal-to-noise ratio margin in the initial signal-to-noise ratio margin of the at least one group of subchannels, and multiplying the smallest initial signal-to-noise ratio margin by the proportion coefficient to obtain the noise variation information.

With reference to the first possible implementation manner of the first aspect, in a third possible implementation manner, the increasing the signal-to-noise ratio margin of each group of subchannels according to the noise variation information is specifically:
reducing a quantity of bit bearers of each group of subchannels according to the noise variation information.

With reference to the first possible implementation manner of the first aspect, in a fourth possible implementation manner, the increasing the signal-to-noise ratio margin of each group of subchannels according to the noise variation information is specifically:
increasing transmit power according to the noise variation information.

With reference to the first possible implementation manner of the first aspect, in a fifth possible implementation manner, the increasing the signal-to-noise ratio margin of each group of subchannels according to the noise variation information is specifically:
increasing forward error correction redundancy of each group of subchannels according to the noise variation information.

In a sixth possible implementation manner, before the determining a retransmission request rate of each group of subchannels according to a retransmission request received through at least two groups of subchannels, the method further includes:
encapsulating a transmission channel into the at least two groups of subchannels by means of forward error correction; or decomposing the transmission channel into the at least two groups of subchannels, wherein each group of subchannels is corresponding to a group of subcarriers.

According to a second aspect, an embodiment of the present invention provides a transmit end modulation adjustment apparatus, including:
a determining unit, configured to: determine a retransmission request rate of each group of subchannels according to a retransmission request received through at least two groups of subchannels, determine at least one group of subchannels whose retransmission request rate is not a hundred percent, and determine noise variation information according to an initial signal-to-noise ratio margin of the at least one group of subchannels, where each group of subchannels includes at least one subchannel, and the initial signal-to-noise ratio margin of each group of subchannels is different from that of each other group of subchannels; and
an adjustment unit, connected to the determining unit and configured to adjust a signal-to-noise ratio margin of each group of subchannels according to the noise variation information.

In a first possible implementation manner, the determining unit is specifically configured to generate the noise variation information according to a smallest initial signal-to-noise ratio margin in the initial signal-to-noise ratio margin of the at least one group of subchannels; and
correspondingly, the adjustment unit is specifically configured to increase the signal-to-noise ratio margin of each group of subchannels according to the noise variation information.

With reference to the first possible implementation manner of the second aspect, in a second possible implementation manner, the determining unit is specifically configured to: determine that the smallest initial signal-to-noise ratio margin in the initial signal-to-noise ratio margin of the at least one group of subchannels is the noise variation information; or determine a proportion coefficient according to a retransmission request rate of a group of subchannels with the smallest initial signal-to-noise ratio margin in the initial signal-to-noise ratio margin of the at least one group of subchannels, and multiply the smallest initial signal-to-noise ratio margin by the proportion coefficient to obtain the noise variation information.

With reference to the first possible implementation manner of the second aspect, in a third possible implementation manner, the adjustment unit is specifically configured to reduce a quantity of bit bearers of each group of subchannels according to the noise variation information.

With reference to the first possible implementation manner of the second aspect, in a fourth possible implementation manner, the adjustment unit is specifically configured to increase transmit power according to the noise variation information.

With reference to the first possible implementation manner of the second aspect, in a fifth possible implementation manner, the adjustment unit is specifically configured to increase forward error correction redundancy of each group of subchannels according to the noise variation information.

In a sixth possible implementation manner, the transmit end modulation adjustment apparatus further includes:
an encapsulating unit, connected to the determining unit and configured to: encapsulate a transmission channel into the at least two groups of subchannels by means of forward error correction; or decompose the transmission channel into the at least two groups of subchannels, wherein each group of subchannels is corresponding to a group of subcarriers.

According to the transmit end modulation adjustment method and apparatus, and the transmit end provided in the embodiments of the present invention, the transmit end modulation adjustment apparatus determines a retransmission request rate of each group of subchannels according to a retransmission request received through at least two groups of subchannels, determines at least one group of subchannels whose retransmission request rate is not a hundred percent, determines noise variation information according to an initial signal-to-noise ratio margin of the at least one group of subchannels, and adjusts a signal-to-noise ratio margin of each group of subchannels according to the noise variation information of the subchannels. Because an initial signal-to-noise ratio margin of each group of subchannels is unique, a noise variation situation at a receive end can be determined according to the initial signal-to-noise ratio margin of the at least one group of subchannels whose retransmission request rate is not a hundred percent, thereby greatly improving accuracy of noise variation estimation. In addition, a modulation parameter is adjusted according to the noise variation situation, which implements accurate dynamic adjustment of a modulation parameter at the transmit end, and improves a transmission effect of a communications system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a transmit end modulation adjustment method according to an embodiment of the present invention;
FIG. 2 is a flowchart of another transmit end modulation adjustment method according to an embodiment of the present invention;
FIG. 3 is a schematic structural diagram of a transmit end modulation adjustment apparatus according to an embodiment of the present invention;
FIG. 4 is a schematic structural diagram of another transmit end modulation adjustment apparatus according to an embodiment of the present invention; and
FIG. 5 is a schematic structural diagram of a transmit end according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some rather than all of the embodiments of the present invention. All other embodiments obtained by persons of ordinary skill in the art based on the embodiments of the present invention without creative efforts shall fall within the protection scope of the present invention.

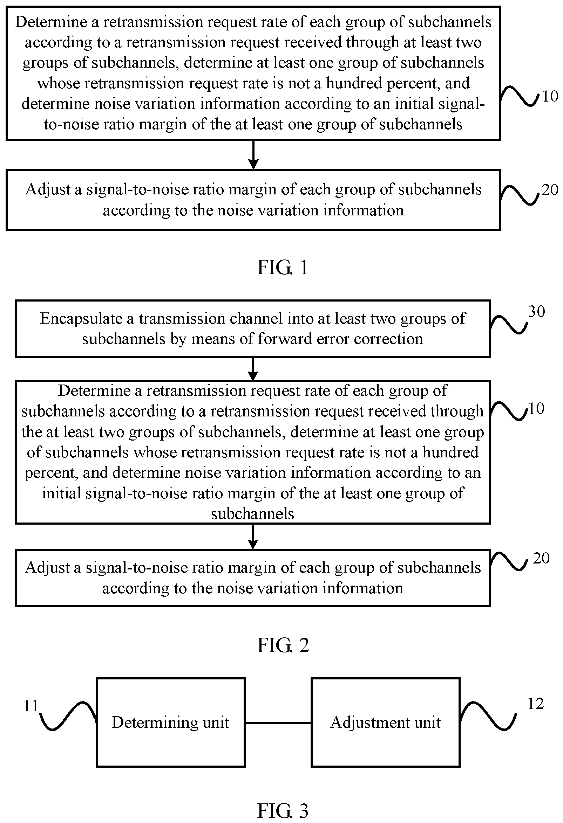

FIG. 1 is a flowchart of a transmit end modulation adjustment method according to an embodiment of the present invention. As shown in FIG. 1, the transmit end modulation adjustment method provided in this embodiment may be specifically applied to a process of dynamically adjusting a modulation parameter at a transmit end in a communications system. The communications system may be specifically a communications system that uses an OFDM (orthogonal frequency division multiplexing, Orthogonal Frequency Division Multiplexing) modulation and demodulation technology, or may be another communications system that uses a plurality of subchannels for data transmission. The transmit end modulation adjustment method provided in this embodiment may be specifically performed by a transmit end modulation adjustment apparatus, where the transmit end modulation adjustment apparatus may be integrated at the transmit end of the communications system.

The transmit end modulation adjustment method provided in this embodiment specifically includes the following steps:
Step 10: Determine a retransmission request rate of each group of subchannels according to a retransmission request received through at least two groups of subchannels, determine at least one group of subchannels whose retransmission request rate is not a hundred percent, and determine noise variation information according to an initial signal-to-noise ratio margin of the at least one group of subchannels, where each group of subchannels includes at least one subchannel, and an initial signal-to-noise ratio margin of each group of subchannels is unique.
Step 20: Adjust a signal-to-noise ratio margin of each group of subchannels according to the noise variation information.

Specifically, a transmission channel of a communications system is decomposed into a plurality of subchannels in advance, and there may be multiple manners of decomposing the channel into the plurality of subchannels. In a first implementation manner, if the communications system uses the OFDM modulation and demodulation technology, the transmission channel may be decomposed into a plurality of mutually orthogonal subchannels according to a subcarrier; in a second implementation manner, the transmission channel may be encapsulated into a plurality of logical subchannels by means of FEC (forward error correction, Forward Error Correction); or in a third implementation manner, the transmission channel may be decomposed into a plurality of subchannels by using a layered mapping method. Decomposing the transmission channel into subchannels may also be implemented in another manner, and this embodiment sets no limit thereto.

The plurality of subchannels is further divided into at least two groups, where each group of subchannels includes at least one subchannel, an initial signal-to-noise ratio margin (SNR Margin) of each group of subchannels is unique, and initial SNR Margins of all subchannels in one group of subchannels are the same. For example, all subchannels are separately numbered 1 to 8 in advance. The eight subchannels are divided into four groups. A first group of subchannels includes subchannels numbered 1, 2, 5, and 6 separately, and an initial SNR Margin of the first group of subchannels is 0dB. A second group of subchannels includes subchannels numbered 3 and 7 separately, and an initial SNR Margin of the second group of subchannels is 3dB. A third group of subchannels includes a subchannel numbered 4, and an initial SNR Margin of the third group of subchannels is 6dB. A fourth group of subchannels includes a subchannel numbered 8, and an initial SNR Margin of the fourth group of subchannels is 9dB. A quantity of subchannels with a smaller initial SNR Margin may be greater than a quantity of subchannels with a larger initial SNR Margin, and subchannels with different initial SNR Margins are arranged in an alternate manner, so as to improve a transmission capability of the communications system.

The transmit end modulation adjustment apparatus sets a modulation parameter according to an initial SNR Margin, and transmits data packets to a receive end through all channels. When the receive end does not receive a data packet or receives an erroneous data packet, the receive end sends a retransmission request to the transmit end. For each group of subchannels, the transmit end determines a retransmission request rate of the group of subchannels according to a retransmission request received by this group of subchannels, determines at least one group of subchannels whose retransmission request rate is not a hundred percent, and determines noise variation information according to an initial signal-to-noise ratio margin of the at least one group of subchannels whose retransmission request rate is not a hundred percent, where the noise variation information is specifically used to indicate a variation situation of noise. The transmit end modulation adjustment apparatus adjusts the signal-to-noise ratio margin of each group of subchannels according to the noise variation information, so as to implements adjustment of the modulation parameter. There may be a plurality of specific implementation manners:

In a first implementation manner, if retransmission request rates of all groups of subchannels are not a hundred percent and are all less than a preset threshold, that is, the retransmission request rates of all groups of subchannels are relatively small, it indicates that the channel is in a good condition and there is no noise variation, that is, a noise variation information value is zero, and the modulation parameter may not be adjusted, that is, each group of subchannels retains an initial SNR Margin.

In a second implementation manner, if there is at least one group of subchannels whose retransmission request rate is a hundred percent or exceeds a preset threshold, but a retransmission request rate of another subchannel is not high, it indicates that noise at the receive end increases, and a noise increment is between an initial SNR Margin of a subchannel whose retransmission request rate is a hundred percent and an initial SNR Margin of a subchannel whose retransmission request rate is not a hundred percent. Then, preferably, it is determined that a smallest initial SNR Margin in the subchannel whose retransmission request rate is not a hundred percent or does not exceed the preset threshold is the noise increment, where the noise increment is the noise variation information, and the signal-to-noise ratio margin of each group of subchannels is increased according to the noise increment.

In a third implementation manner, if there is at least one group of subchannels whose retransmission request rate is a hundred percent or exceeds a preset threshold, but a retransmission request rate of another subchannel is not high, it indicates that noise at the receive end increases, and a noise increment is between an initial SNR Margin of a subchannel whose retransmission request rate is a hundred percent and an initial SNR Margin of a subchannel whose retransmission request rate is not a hundred percent. Further, a smallest initial SNR Margin in the subchannel whose retransmission request rate is not a hundred percent or does not exceed the preset threshold can be determined; a proportion coefficient is determined according to a retransmission request rate of a subchannel corresponding to the smallest initial SNR Margin; the smallest initial SNR Margin may be multiplied by the proportion coefficient to obtain the noise increment, where the noise increment is the noise variation information, and the signal-to-noise ratio margin of each group of subchannels is increased according to the noise increment.

In a fourth implementation manner, if retransmission request rates of all groups of subchannels are not a hundred percent, and a retransmission request rate of a group of subchannels with a smallest initial SNR Margin is relatively small, a lowest threshold may be set. If the retransmission request rate is smaller than the lowest threshold, it indicates that a network at this moment is in a good condition, and noise at the receive end is relatively low or is decreased to a certain degree, and then, a noise decrement can be determined according to the smallest SNR Margin, where the noise decrement is the noise variation information, and the signal-to-noise ratio margin of each group of subchannels is reduced according to the noise decrement.

In this embodiment of the present invention, several implementation manners are provided, but according to actual adjustment accuracy and a transmission requirement, persons skilled in the art may determine noise variation information according to a retransmission request rate, and adjusts a signal-to-noise ratio margin of a subchannel according to the noise variation information, and this embodiment sets no limit thereto.

According to the transmit end modulation adjustment method provided in this embodiment, a transmit end modulation adjustment apparatus determines a retransmission request rate of each group of subchannels according to a retransmission request received through at least two groups of subchannels, determines at least one group of subchannels whose retransmission request rate is not a hundred percent, determines noise variation information according to an initial signal-to-noise ratio margin of the at least one group of subchannels, and adjusts a signal-to-noise ratio margin of each group of subchannels according to the noise variation information of the subchannels. Because an initial signal-to-noise ratio margin of each group of subchannels is unique, a noise variation situation at a receive end can be determined according to the initial signal-to-noise ratio margin of the at least one group of subchannels whose retransmission request rate is not a hundred percent, thereby greatly improving accuracy of noise variation estimation. In addition, a modulation parameter is adjusted according to the noise variation situation, which implements accurate dynamic adjustment of a modulation parameter at the transmit end, and improves a transmission effect of a communications system.

In this embodiment, the determining noise variation information according to an initial signal-to-noise ratio margin of the at least one group of subchannels may be specifically:
generating a noise increment according to a smallest initial signal-to-noise ratio margin in the initial signal-to-noise ratio margin of the at least one group of subchannels.

Correspondingly, the adjusting a signal-to-noise ratio margin of each group of subchannels according to the noise variation information in step 20 is specifically:
increasing the signal-to-noise ratio margin of each group of subchannels according to the noise increment.

Specifically, in an actual application process, it may be that a smallest value of the initial signal-to-noise ratio margin in the initial signal-to-noise ratio margin of the at least one group of subchannels whose retransmission request rate is not a hundred percent is used as the noise increment, and the SNR Margin of each group of subchannels is increased according to the noise increment. For example, if the noise increment is 3dB, the SNR Margin needs to be increased by 3dB at the transmit end; if the noise increment is 6dB, the SNR Margin needs to be increased by 6dB at the transmit end; if the noise increment is 9dB, the SNR Margin needs to be increased by 9dB at the transmit end. If retransmission request rates of the foregoing first group of subchannels, second group of subchannels, third group of subchannels, and fourth group of subchannels are all a hundred percent, pulse noise may occur, and the SNR Margin does not need to be increased at the transmit end.

Further, the noise increment may be generated based on the smallest value. For example, a proportion coefficient is determined according to a retransmission request rate, and the smallest value of the initial signal-to-noise ratio margin is multiplied by the proportion coefficient to obtain the noise increment, or it may also be determined according to a preset rule that an initial signal-to-noise ratio margin of the at least one group of subchannels whose retransmission request rate is not a hundred percent is used as the noise increment.

In this embodiment, the generating a noise increment according to a smallest initial signal-to-noise ratio margin in the initial signal-to-noise ratio margin of the at least one group of subchannels may be specifically:
determining that the smallest initial signal-to-noise ratio margin in the initial signal-to-noise ratio margin of the at least one group of subchannels is the noise increment; or
determining a proportion coefficient according to a retransmission request rate of a group of subchannels with the smallest initial signal-to-noise ratio margin in the initial signal-to-noise ratio margin of the at least one group of subchannels, and multiplying the smallest initial signal-to-noise ratio margin by the proportion coefficient to obtain the noise increment.

Specifically, in an implementation manner, it is determined that the smallest initial signal-to-noise ratio margin in the initial signal-to-noise ratio margin of the at least one group of subchannels is the noise increment. For example, if a retransmission request rate of the first group of subchannels whose initial SNR Margin is 0dB is a hundred percent, but a retransmission request rate of the second group of subchannels whose initial SNR Margin is 3dB is relatively small, it indicates that noise at the receive end is increased by 3dB, and the noise increment is 3dB; if retransmission request rates of the first group of subchannels and the second group of subchannels are both a hundred percent, but a retransmission request rate of the third group of subchannels whose initial SNR Margin is 6dB is relatively small, it indicates that noise at the receive end is increased by 6dB, and the noise increment is 6dB; and if retransmission request rates of the first group of subchannels, the second group of subchannels, and the third group of subchannels are all a hundred percent, but a retransmission request rate of the fourth group of subchannels whose initial SNR Margin is 9dB is relatively small, it indicates that noise at the receive end is increased by 9 dB, and the noise increment is 9dB.

In another implementation manner, for example, a retransmission request rate of the first group of subchannels whose initial SNR Margin is 0dB is a hundred percent, but retransmission request rates of the second group of subchannels, the third group of subchannels, and the fourth group of subchannels whose initial SNR Margins are respectively 3dB, 6dB, and 9dB are all relatively small. Because retransmission request rates are different if noise increments are different, a proportion coefficient can be determined according to the retransmission request rate of the second group of subchannels, and a product of the proportion coefficient and an initial SNR Margin of the second group of subchannels is used as the noise increment, so as to further improve accuracy in determining the noise increment.

In this embodiment, the increasing the signal-to-noise ratio margin of each group of subchannels according to the noise increment may be specifically:
reducing a quantity of bit bearers of each group of subchannels according to the noise increment.

Specifically, there may be a plurality of manners of improving the SNR Margin of each group of subchannels. In a first implementation manner, the SNR Margin may be improved in a manner of reducing a quantity of bit bearers of each group of subchannels. Generally, reducing the quantity of bit bearers by 1 bit may increase the SNR Margin by 3dB.

In this embodiment, the increasing the signal-to-noise ratio margin of each group of subchannels according to the noise increment may be specifically:
increasing transmit power according to the noise increment.

In a second implementation manner, transmit power of the transmit end may be increased. Generally, increasing the transmit power by 3 dB may increase the SNR Margin by 3dB.

In this embodiment, the increasing the signal-to-noise ratio margin of each group of subchannels according to the noise increment may be specifically:
increasing forward error correction redundancy of each group of subchannels according to the noise increment.

In a third implementation manner, if an FEC technology is used in the communications system to correct a bit error, an increase of the SNR Margin may also be implemented by increasing FEC redundancy of each group of subchannels. For example, in LDPC (low density parity check code, Low Density Parity Check Code) coding, specifically, for a correspondence between FEC redundancy and a codec gain, refer to Table 1.

**Table 1**

| **FEC Redundancy** | **Codec Gain** |
|---|---|
| 1/9 | 7dB |
| 1/4 | 10dB |
| 1/3 | 13dB |
| 1/2 | 16dB |

The codec gain is a part of the SNR Margin, so that the SNR Margin may be increased by increasing the codec gain.

It should be noted that, in a process of dynamically adjusting a modulation parameter at the transmit end, after the SNR Margin is adjusted once, a process of determining a noise increment based on a retransmission request rate may be based on an SNR Margin, adjusted at a previous time, of each group of subchannels, that is, the SNR Margin, adjusted at the previous time, of each group of subchannels is used as the initial SNR Margin.

FIG. 2 is a flowchart of another transmit end modulation adjustment method according to an embodiment of the present invention. As shown in FIG. 2, in this embodiment, before the determining a retransmission request rate of each group of subchannels according to a retransmission request received through at least two groups of subchannels in step 10, the method may further include the following step:
Step 30: Encapsulate a transmission channel into the at least two groups of subchannels by means of forward error correction; or decompose a transmission channel into the at least two groups of subchannels according to a subcarrier.

Specifically, the transmission channel is encapsulated into a plurality of subchannels by means of EFC, and initial SNR Margins or noise Margins of subchannels with different FEC redundancy are different. Specifically, for a correspondence between FEC redundancy and an initial SNR Margin, reference may be made to Table 2.

**Table 2**

| | **FEC Redundancy** | **SNR Margin** |
|---|---|---|
| Subchannel 1 | 1/9 | 0dB |
| Subchannel 2 | 1/4 | 3dB |
| Subchannel 3 | 1/3 | 6dB |
| Subchannel 4 | 1/2 | 9dB |

FIG. 3 is a schematic structural diagram of a transmit end modulation adjustment apparatus according to an embodiment of the present invention. As shown in FIG. 3, the transmit end modulation adjustment apparatus provided in this embodiment can specifically implement all steps of the transmit end modulation adjustment method provided in any embodiment of the present invention, and a specific implementation process is not described herein again. The transmit end modulation adjustment apparatus provided in this embodiment of the present invention specifically includes a determining unit 11 and an adjustment unit 12. The determining unit 11 is configured to: determine a retransmission request rate of each group of subchannels according to a retransmission request received through at least two groups of subchannels, determine at least one group of subchannels whose retransmission request rate is not a hundred percent, and determine noise variation information according to an initial signal-to-noise ratio margin of the at least one group of subchannels, where each group of subchannels includes at least one subchannel, and an initial signal-to-noise ratio margin of each group of subchannels is unique. The adjustment unit 12 is connected to the determining unit 11 and is configured to adjust a signal-to-noise ratio margin of each group of subchannels according to the noise variation information.

According to the transmit end modulation adjustment apparatus provided in this embodiment of the present invention, a determining unit 11 determines a retransmission request rate of each group of subchannels according to a retransmission request received through at least two groups of subchannels, determines at least one group of subchannels whose retransmission request rate is not a hundred percent, and determines noise variation information according to an initial signal-to-noise ratio margin of the at least one group of subchannels; and an adjustment unit 12 adjusts a signal-to-noise ratio margin of each group of subchannels according to the noise variation information of the subchannels. Because an initial signal-to-noise ratio margin of each group of subchannels is unique, a noise variation situation at a receive end can be determined according to the initial signal-to-noise ratio margin of the at least one group of subchannels whose retransmission request rate is not a hundred percent, thereby greatly improving accuracy of noise variation estimation. In addition, a modulation parameter is adjusted according to the noise variation situation, which implements accurate dynamic adjustment of a modulation parameter at the transmit end, and improves a transmission effect of a communications system.

In this embodiment, the determining unit 11 is specifically configured to generate a noise increment according to a smallest initial signal-to-noise ratio margin in the initial signal-to-noise ratio margin of the at least one group of subchannels; and correspondingly, the adjustment unit 12 is specifically configured to increase the signal-to-noise ratio margin of each group of subchannels according to the noise increment.

In this embodiment, the determining unit 11 is specifically configured to: determine that the smallest initial signal-to-noise ratio margin in the initial signal-to-noise ratio margin of the at least one group of subchannels is the noise increment; or determine a proportion coefficient according to a retransmission request rate of a group of subchannels with the smallest initial signal-to-noise ratio margin in the initial signal-to-noise ratio margin of the at least one group of subchannels, and multiply the smallest initial signal-to-noise ratio margin by the proportion coefficient to obtain the noise increment. In this embodiment, the adjustment unit 12 is specifically configured to reduce a quantity of bit bearers of each group of subchannels according to the noise increment.

In this embodiment, the adjustment unit 12 is specifically configured to increase transmit power according to the noise increment.

In this embodiment, the adjustment unit 12 is specifically configured to increase forward error correction redundancy of each group of subchannels according to the noise increment.

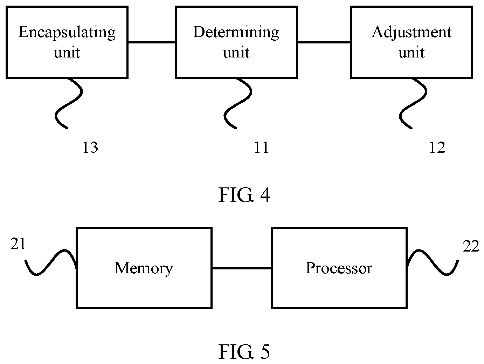

FIG. 4 is a schematic structural diagram of another transmit end modulation adjustment apparatus according to an embodiment of the present invention. As shown in FIG. 4, in this embodiment, the transmit end modulation adjustment apparatus may further include an encapsulating unit 13, where the encapsulating unit 13 is connected to the determining unit 11 and is configured to: encapsulate a transmission channel into the at least two groups of subchannels by means of forward error correction; or decompose a transmission channel into the at least two groups of subchannels according to a subcarrier.

FIG. 5 is a schematic structural diagram of a transmit end according to an embodiment of the present invention. As shown in FIG. 5, the transmit end provided in this embodiment specifically includes a memory 21 and a processor 22. The memory 21 is configured to store an instruction. The processor 22 is coupled to the memory 21, where the processor 22 is configured to execute the instruction stored in the memory 21, and the processor 22 is configured to: determine a retransmission request rate of each group of subchannels according to a retransmission request received through at least two groups of subchannels, determine at least one group of subchannels whose retransmission request rate is not a hundred percent, and determine noise variation information according to an initial signal-to-noise ratio margin of the at least one group of subchannels, where each group of subchannels includes at least one subchannel, and an initial signal-to-noise ratio margin of each group of subchannels is unique; and adjust a signal-to-noise ratio margin of each group of subchannels according to the noise variation information.

According to the transmit end provided in this embodiment, a processor 22 determines a retransmission request rate of each group of subchannels according to a retransmission request received through at least two groups of subchannels, determines at least one group of subchannels whose retransmission request rate is not a hundred percent, determines noise variation information according to an initial signal-to-noise ratio margin of the at least one group of subchannels, and adjusts a signal-to-noise ratio margin of each group of subchannels according to the noise variation information of the subchannels. Because an initial signal-to-noise ratio margin of each group of subchannels is unique, a noise variation situation at a receive end can be determined according to the initial signal-to-noise ratio margin of the at least one group of subchannels whose retransmission request rate is not a hundred percent, thereby greatly improving accuracy of noise variation estimation. In addition, a modulation parameter is adjusted according to the noise variation situation, which implements accurate dynamic adjustment of a modulation parameter at the transmit end, and improves a transmission effect of a communications system.

In this embodiment, the processor 22 is specifically configured to: generate a noise increment according to a smallest initial signal-to-noise ratio margin in the initial signal-to-noise ratio margin of the at least one group of subchannels; and increase the signal-to-noise ratio margin of each group of subchannels according to the noise increment.

In this embodiment, the processor 22 is specifically configured to: determine that the smallest initial signal-to-noise ratio margin in the initial signal-to-noise ratio margin of the at least one group of subchannels is the noise increment; or determine a proportion coefficient according to a retransmission request rate of a group of subchannels with the smallest initial signal-to-noise ratio margin in the initial signal-to-noise ratio margin of the at least one group of subchannels, and multiply the smallest initial signal-to-noise ratio margin by the proportion coefficient to obtain the noise increment.

In this embodiment, the processor 22 is specifically configured to reduce a quantity of bit bearers of each group of subchannels according to the noise increment.

In this embodiment, the processor 22 is specifically configured to increase transmit power according to the noise increment.

In this embodiment, the processor 22 is specifically configured to increase forward error correction redundancy of each group of subchannels according to the noise increment.

In this embodiment, the processor 22 is further configured to: encapsulate a transmission channel into the at least two groups of subchannels by means of forward error correction; or decompose a transmission channel into the at least two groups of subchannels according to a subcarrier.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A transmit end modulation adjustment method, comprising:
determining (10) a retransmission request rate of each group of subchannels according to a retransmission request received through at least two groups of subchannels, determining at least one group of subchannels whose retransmission request rate is not a hundred percent, and determining noise variation information according to an initial signal-to-noise ratio margin of the at least one group of subchannels, wherein each group of subchannels comprises at least one subchannel, and the initial signal-to-noise ratio margin of each group of subchannels is different from that of each other group of subchannels; and
adjusting (20) a signal-to-noise ratio margin of each group of subchannels according to the noise variation information, **characterized in that**, the determining noise variation information according to the initial signal-to-noise ratio margin of the at least one group of subchannels is specifically:
generating the noise variation information according to a smallest initial signal-to-noise ratio margin in the initial signal-to-noise ratio margin of the at least one group of subchannels; and
correspondingly, the adjusting a signal-to-noise ratio margin of each group of subchannels according to the noise variation information is specifically:
increasing the signal-to-noise ratio margin of each group of subchannels according to the noise variation information.

2. The transmit end modulation adjustment method according to claim 1, wherein the generating the noise variation information according to the smallest initial signal-to-noise ratio margin in the initial signal-to-noise ratio margin of the at least one group of subchannels is specifically:
determining that the smallest initial signal-to-noise ratio margin in the initial signal-to-noise ratio margin of the at least one group of subchannels is the noise variation information; or
determining a proportion coefficient according to a retransmission request rate of a group of subchannels with the smallest initial signal-to-noise ratio margin in the initial signal-to-noise ratio margin of the at least one group of subchannels, and multiplying the smallest initial signal-to-noise ratio margin by the proportion coefficient to obtain the noise variation information.

3. The transmit end modulation adjustment method according to claim 1, wherein the increasing the signal-to-noise ratio margin of each group of subchannels according to the noise variation information is specifically:
reducing a quantity of bit bearers of each group of subchannels according to the noise variation information.

4. The transmit end modulation adjustment method according to claim 1, wherein the increasing the signal-to-noise ratio margin of each group of subchannels according to the noise variation information is specifically:
increasing transmit power according to the noise variation information.

5. The transmit end modulation adjustment method according to claim 1, wherein the increasing the signal-to-noise ratio margin of each group of subchannels according to the noise variation information is specifically:
increasing forward error correction redundancy of each group of subchannels according to the noise variation information.

6. The transmit end modulation adjustment method according to claim 1, wherein before the determining (10) a retransmission request rate of each group of subchannels according to a retransmission request received through at least two groups of subchannels, the method further comprises:
encapsulating (30) a transmission channel into the at least two groups of subchannels by means of forward error correction; or
decomposing the transmission channel into the at least two groups of subchannels,
wherein each group of subchannels is corresponding to a group of subcarriers.

7. A transmit end modulation adjustment apparatus, comprising:
a determining unit (11), configured to: determine a retransmission request rate of each group of subchannels according to a retransmission request received through at least two groups of subchannels, determine at least one group of subchannels whose retransmission request rate is not a hundred percent, and determine noise variation information according to an initial signal-to-noise ratio margin of the at least one group of subchannels, wherein each group of subchannels comprises at least one subchannel, and the initial signal-to-noise ratio margin of each group of subchannels is different from that of each other group of subchannels ; and
an adjustment unit (12), connected to the determining unit (11) and configured to adjust a signal-to-noise ratio margin of each group of subchannels according to the noise variation information, **characterized in that**, the determining unit (11) is specifically configured to generate the noise variation information according to a smallest initial signal-to-noise ratio margin in the initial signal-to-noise ratio margin of the at least one group of subchannels; and
correspondingly, the adjustment unit (12) is specifically configured to increase the signal-to-noise ratio margin of each group of subchannels according to the noise variation information.

8. The transmit end modulation adjustment apparatus according to claim 7, wherein the determining unit (11) is specifically configured to: determine that the smallest initial signal-to-noise ratio margin in the initial signal-to-noise ratio margin of the at least one group of subchannels is the noise variation information; or determine a proportion coefficient according to a retransmission request rate of a group of subchannels with the smallest initial signal-to-noise ratio margin in the initial signal-to-noise ratio margin of the at least one group of subchannels, and multiply the smallest initial signal-to-noise ratio margin by the proportion coefficient to obtain the noise variation information.

9. The transmit end modulation adjustment apparatus according to claim 7, wherein the adjustment unit (12) is specifically configured to reduce a quantity of bit bearers of each group of subchannels according to the noise variation information.

10. The transmit end modulation adjustment apparatus according to claim 7, wherein the adjustment unit (12) is specifically configured to increase transmit power according to the noise variation information.

11. The transmit end modulation adjustment apparatus according to claim 7, wherein the adjustment unit (12) is specifically configured to increase forward error correction redundancy of each group of subchannels according to the noise variation information.

12. The transmit end modulation adjustment apparatus according to claim 7, further comprising:
an encapsulating unit (13), connected to the determining unit (11) and configured to: encapsulate the transmission channel into the at least two groups of subchannels by means of forward error correction; or decompose a transmission channel into the at least two groups of subchannels, wherein each group of subchannels is corresponding to a group of subcarriers.

## Patentansprüche

1. Verfahren zur Einstellung einer Übertragungsendmodulation, welches Folgendes aufweist:
Bestimmen (10) einer Weiterübertragungsanfragerate von jeder Gruppe von Unterkanälen gemäß einer Weiterübertragungsanfrage, die über mindestens zwei Gruppen von Unterkanälen empfangen wird, Bestimmen mindestens einer Gruppe von Unterkanälen, deren Weiterübertragungsanfragerate nicht einhundert Prozent ist, und Bestimmen von Rauschvariationsinformationen gemäß einer anfänglichen Signal-Rausch-Verhältnis-Spanne der mindestens einen Gruppe von Unterkanälen, wobei jede Gruppe von Unterkanälen mindestens einen Unterkanal aufweist und sich die anfängliche Signal-Rausch-Verhältnis-Spanne von jeder Gruppe von Unterkanälen von der jeder anderen Gruppe von Unterkanälen unterscheidet; und
Einstellen (20) einer Signal-Rausch-Verhältnis-Spanne von jeder Gruppe von Unterkanälen gemäß den Rauschvariationsinformationen, **dadurch gekennzeichnet, dass** das Bestimmen von Rauschvariationsinformationen gemäß der anfänglichen Signal-Rausch-Verhältnis-Spanne der mindestens einen Gruppe von Unterkanälen spezifisch Folgendes ist:
Erzeugen der Rauschvariationsinformationen gemäß einer kleinsten anfänglichen Signal-Rausch-Verhältnis-Spanne in der anfänglichen Signal-Rausch-Verhältnis-Spanne der mindestens einen Gruppe von Unterkanälen; und
dementsprechend ist das Einstellen einer Signal-Rausch-Verhältnis-Spanne von jeder Gruppe von Unterkanälen gemäß den Rauschvariationsinformationen spezifisch Folgendes:
Erhöhen der Signal-Rausch-Verhältnis-Spanne von jeder Gruppe von Unterkanälen gemäß den Rauschvariationsinformationen.

2. Verfahren zur Einstellung einer Übertragungsendmodulation nach Anspruch 1, wobei das Erzeugen der Rauschvariationsinformationen gemäß der kleinsten anfänglichen Signal-Rausch-Verhältnis-Spanne in der anfänglichen Signal-Rausch-Verhältnis-Spanne der mindestens einen Gruppe von Unterkanälen spezifisch Folgendes ist:
Bestimmen, dass die kleinste anfängliche Signal-Rausch-Verhältnis-Spanne in der anfänglichen Signal-Rausch-Verhältnis-Spanne der mindestens einen Gruppe von Unterkanälen die Rauschvariationsinformationen sind; oder
Bestimmen eines Proportionskoeffizienten gemäß einer Weiterübertragungsanfragerate von einer Gruppe von Unterkanälen mit der kleinsten anfänglichen Signal-Rausch-Verhältnis-Spanne in der anfänglichen Signal-Rausch-Verhältnis-Spanne der mindestens einen Gruppe von Unterkanälen, und Multiplizieren der kleinsten anfänglichen Signal-Rausch-Verhältnis-Spanne mit dem Proportionskoeffizienten zum Erhalten der Rauschvariationsinformationen.

3. Verfahren zur Einstellung einer Übertragungsendmodulation nach Anspruch 1, wobei das Erhöhen der Signal-Rausch-Verhältnis-Spanne von jeder Gruppe von Unterkanälen gemäß den Rauschvariationsinformationen spezifisch Folgendes ist:
Verringern einer Menge von Bitträgern von jeder Gruppe von Unterkanälen gemäß den Rauschvariationsinformationen.

4. Verfahren zur Einstellung einer Übertragungsendmodulation nach Anspruch 1, wobei das Erhöhen der Signal-Rausch-Verhältnis-Spanne von jeder Gruppe von Unterkanälen gemäß den Rauschvariationsinformationen spezifisch Folgendes ist:
Erhöhen der Übertragungsleistung gemäß den Rauschvariationsinformationen.

5. Verfahren zur Einstellung einer Übertragungsendmodulation nach Anspruch 1, wobei das Erhöhen der Signal-Rausch-Verhältnis-Spanne von jeder Gruppe von Unterkanälen gemäß den Rauschvariationsinformationen spezifisch Folgendes ist:
Erhöhen der Vorwärtsfehlerkorrekturredundanz von jeder Gruppe von Unterkanälen gemäß den Rauschvariationsinformationen.

6. Verfahren zur Einstellung einer Übertragungsendmodulation gemäß Anspruch 1, wobei vor dem Bestimmen (10) einer Weiterübertragungsanfragerate von jeder Gruppe von Unterkanälen gemäß einer Weiterübertragungsanfrage, die über mindestens zwei Gruppen von Unterkanälen empfangen wird, das Verfahren ferner Folgendes aufweist:
Einkapseln (30) eines Übertragungskanals in die mindestens zwei Gruppen von Unterkanälen mittels Vorwärtsfehlerkorrektur; oder
Zerlegen des Übertragungskanals in die mindestens zwei Gruppen von Unterkanälen, wobei jede Gruppe von Unterkanälen einer Gruppe von Unterträgern entspricht.

7. Vorrichtung zur Einstellung einer Übertragungsendmodulation, welche Folgendes aufweist:
eine Bestimmungseinheit (11), die zu Folgendem konfiguriert ist: Bestimmen einer Weiterübertragungsanfragerate von jeder Gruppe von Unterkanälen gemäß einer Weiterübertragungsanfrage, die über mindestens zwei Gruppen von Unterkanälen empfangen wird, Bestimmen mindestens einer Gruppe von Unterkanälen, deren Weiterübertragungsanfragerate nicht einhundert Prozent ist, und Bestimmen von Rauschvariationsinformationen gemäß einer anfänglichen Signal-Rausch-Verhältnis-Spanne der mindestens einen Gruppe von Unterkanälen, wobei jede Gruppe von Unterkanälen mindestens einen Unterkanal aufweist und sich die anfängliche Signal-Rausch-Verhältnis-Spanne von jeder Gruppe von Unterkanälen von der jeder anderen Gruppe von Unterkanälen unterscheidet; und
eine Einstellungseinheit (12), die mit der Bestimmungseinheit (11) verbunden ist und konfiguriert ist zum Einstellen einer Signal-Rausch-Verhältnis-Spanne von jeder Gruppe von Unterkanälen gemäß den Rauschvariationsinformationen, **dadurch gekennzeichnet, dass** die Bestimmungseinheit (11) spezifisch konfiguriert ist zum Erzeugen der Rauschvariationsinformationen gemäß einer kleinsten anfänglichen Signal-Rausch-Verhältnis-Spanne in der anfänglichen Signal-Rausch-Verhältnis-Spanne der mindestens einen Gruppe von Unterkanälen; und
dementsprechend ist die Einstellungseinheit (12) spezifisch konfiguriert zum Erhöhen der Signal-Rausch-Verhältnis-Spanne von jeder Gruppe von Unterkanälen gemäß den Rauschvariationsinformationen.

8. Vorrichtung zur Einstellung einer Übertragungsendmodulation nach Anspruch 7, wobei die Bestimmungseinheit (11) spezifisch zu Folgendem konfiguriert ist: Bestimmen, dass die kleinste anfängliche Signal-Rausch-Verhältnis-Spanne in der anfänglichen Signal-Rausch-Verhältnis-Spanne der mindestens einen Gruppe von Unterkanälen die Rauschvariationsinformationen sind; oder Bestimmen eines Proportionskoeffizienten gemäß einer Weiterübertragungsanfragerate von einer Gruppe von Unterkanälen mit der kleinsten anfänglichen Signal-Rausch-Verhältnis-Spanne in der anfänglichen Signal-Rausch-Verhältnis-Spanne der mindestens einen Gruppe von Unterkanälen, und Multiplizieren der kleinsten anfänglichen Signal-Rausch-Verhältnis-Spanne mit dem Proportionskoeffizienten zum Erhalten der Rauschvariationsinformationen.

9. Vorrichtung zur Einstellung einer Übertragungsendmodulation nach Anspruch 7, wobei die Einstellungseinheit (12) spezifisch konfiguriert ist zum Verringern einer Menge von Bitträgern von jeder Gruppe von Unterkanälen gemäß den Rauschvariationsinformationen.

10. Vorrichtung zur Einstellung einer Übertragungsendmodulation nach Anspruch 7, wobei die Einstellungseinheit (12) spezifisch konfiguriert ist zum Erhöhen der Übertragungsleistung gemäß den Rauschvariationsinformationen.

11. Vorrichtung zur Einstellung einer Übertragungsendmodulation nach Anspruch 7, wobei die Einstellungseinheit (12) spezifisch konfiguriert ist zum Erhöhen der Vorwärtsfehlerkorrekturredundanz von jeder Gruppe von Unterkanälen gemäß den Rauschvariationsinformationen.

12. Vorrichtung zur Einstellung einer Übertragungsendmodulation nach Anspruch 7, welche ferner Folgendes aufweist:
eine Einkapselungseinheit (13), die mit der Bestimmungseinheit (11) verbunden ist und zu Folgendem konfiguriert ist: Einkapseln des Übertragungskanals in die mindestens zwei Gruppen von Unterkanälen mittels Vorwärtsfehlerkorrektur; oder Zerlegen eines Übertragungskanals in die mindestens zwei Gruppen von Unterkanälen, wobei jede Gruppe von Unterkanälen einer Gruppe von Unterträgern entspricht.

## Revendications

1. Procédé d'ajustement de modulation d'extrémité de transmission, comprenant les étapes suivantes :
déterminer (10) un taux de requête de retransmission de chaque groupe de sous-canaux selon une requête de retransmission reçue par l'intermédiaire d'au moins deux groupes de sous-canaux, déterminer au moins un groupe de sous-canaux dont le taux de requête de retransmission n'est pas cent pour cent, et déterminer des informations de variation de bruit selon une marge de rapport signal/bruit initiale dudit groupe de sous-canaux, chaque groupe de sous-canaux comportant au moins un sous-canal, et la marge de rapport signal/bruit initiale de chaque groupe de sous-canaux étant différente de celle de chaque autre groupe de sous-canaux ; et
ajuster (20) une marge de rapport signal/bruit de chaque groupe de sous-canaux selon les informations de variation de bruit, **caractérisé en ce que** l'étape consistant à déterminer des informations de variation de bruit selon la marge de rapport signal/bruit initiale dudit groupe de sous-canaux est spécifiquement :
générer les informations de variation de bruit selon une plus petite marge de rapport signal/bruit initiale dans la marge de rapport signal/bruit initiale dudit groupe de sous-canaux ; et
de même, l'étape consistant à ajuster une marge de rapport signal/bruit de chaque groupe de sous-canaux selon les informations de variation de bruit est spécifiquement :
augmenter la marge de rapport signal/bruit de chaque groupe de sous-canaux selon les informations de variation de bruit.

2. Procédé d'ajustement de modulation d'extrémité de transmission selon la revendication 1, dans lequel l'étape consistant à générer les informations de variation de bruit selon la plus petite marge de rapport signal/bruit initiale dans la marge de rapport signal/bruit initiale dudit groupe de sous-canaux est spécifiquement :
déterminer que la plus petite marge de rapport signal/bruit initiale dans la marge de rapport signal/bruit initiale dudit groupe de sous-canaux correspond aux informations de variation de bruit ; ou
déterminer un coefficient de proportion selon un taux de requête de retransmission d'un groupe de sous-canaux avec la plus petite marge de rapport signal/bruit initiale dans la marge de rapport signal/bruit initiale dudit groupe de sous-canaux, et multiplier la plus petite marge de rapport signal/bruit initiale par le coefficient de proportion pour obtenir les informations de variation de bruit.

3. Procédé d'ajustement de modulation d'extrémité de transmission selon la revendication 1, dans lequel l'étape consistant à augmenter la marge de rapport signal/bruit de chaque groupe de sous-canaux selon les informations de variation de bruit est spécifiquement :
réduire une quantité de supports binaires de chaque groupe de sous-canaux selon les informations de variation de bruit.

4. Procédé d'ajustement de modulation d'extrémité de transmission selon la revendication 1, dans lequel l'étape consistant à augmenter la marge de rapport signal/bruit de chaque groupe de sous-canaux selon les informations de variation de bruit est spécifiquement :
augmenter une puissance de transmission selon les informations de variation de bruit.

5. Procédé d'ajustement de modulation d'extrémité de transmission selon la revendication 1, dans lequel l'étape consistant à augmenter la marge de rapport signal/bruit de chaque groupe de sous-canaux selon les informations de variation de bruit est spécifiquement :
augmenter une redondance de correction d'erreurs sans voie de retour de chaque groupe de sous-canaux selon les informations de variation de bruit.

6. Procédé d'ajustement de modulation d'extrémité de transmission selon la revendication 1 dans lequel, avant l'étape consistant à déterminer (10) un taux de requête de retransmission de chaque groupe de sous-canaux selon une requête de retransmission reçue par l'intermédiaire d'au moins deux groupes de sous-canaux, le procédé comprend en outre :
encapsuler (30) un canal de transmission dans lesdits deux groupes de sous-canaux au moyen d'une correction d'erreurs sans voie de retour ; ou
décomposer le canal de transmission en lesdits deux groupes de sous-canaux, chaque groupe de sous-canaux correspondant à un groupe de sous-porteuses.

7. Appareil d'ajustement de modulation d'extrémité de transmission, comprenant :
une unité de détermination (11), configurée pour : déterminer un taux de requête de retransmission de chaque groupe de sous-canaux selon une requête de retransmission reçue par l'intermédiaire d'au moins deux groupes de sous-canaux, déterminer au moins un groupe de sous-canaux dont un taux de requête de retransmission n'est pas cent pour cent, et déterminer des informations de variation de bruit selon une marge de rapport signal/bruit initiale dudit groupe de sous-canaux, chaque groupe de sous-canaux comportant au moins un sous-canaal, et la marge de rapport signal/bruit initiale de chaque groupe de sous-canaux étant différente de celle de chaque autre groupe de sous-canaux ; et
une unité d'ajustement (12), connectée à l'unité de détermination (11) et configurée pour ajuster une marge de rapport signal/bruit de chaque groupe de sous-canaux selon les informations de variation de bruit, **caractérisé en ce que** l'unité de détermination (11) est configurée spécifiquement pour générer les informations de variation de bruit selon une plus petite marge de rapport signal/bruit initiale dans la marge de rapport signal/bruit initiale dudit groupe de sous-canaux ; et
de même, l'unité d'ajustement (12) est configurée spécifiquement pour augmenter la marge de rapport signal/bruit de chaque groupe de sous-canaux selon les informations de variation de bruit.

8. Appareil d'ajustement de modulation d'extrémité de transmission selon la revendication 7, dans lequel l'unité de détermination (11) est configurée spécifiquement pour : déterminer que la plus petite marge de rapport signal/bruit initiale dans la marge de rapport signal/bruit initiale dudit groupe de sous-canaux correspond aux informations de variation de bruit ; ou déterminer un coefficient de proportion selon un taux de requête de retransmission d'un groupe de sous-canaux avec la plus petite marge de rapport signal/bruit initiale dans la marge de rapport signal/bruit initiale dudit groupe de sous-canaux, et multiplier la plus petite marge de rapport signal/bruit initiale par le coefficient de proportion pour obtenir les informations de variation de bruit.

9. Appareil d'ajustement de modulation d'extrémité de transmission selon la revendication 7, dans lequel l'unité d'ajustement (12) est configurée spécifiquement pour réduire une quantité de supports binaires de chaque groupe de sous-canaux selon les informations de variation de bruit.

10. Appareil d'ajustement de modulation d'extrémité de transmission selon la revendication 7, dans lequel l'unité d'ajustement (12) est configurée spécifiquement pour augmenter une puissance de transmission selon les informations de variation de bruit.

11. Appareil d'ajustement de modulation d'extrémité de transmission selon la revendication 7, dans lequel l'unité d'ajustement (12) est configurée spécifiquement pour augmenter une redondance de correction d'erreurs sans voie de retour de chaque groupe de sous-canaux selon les informations de variation de bruit.

12. Appareil d'ajustement de modulation d'extrémité de transmission selon la revendication 7, comprenant en outre :
une unité d'encapsulation (13), connectée à l'unité de détermination (11) et configurée pour : encapsuler le canal de transmission en lesdits deux groupes de sous-canaux au moyen d'une correction d'erreurs sans voie de retour ; ou décomposer un canal de transmission en lesdits deux groupes de sous-canaux, chaque groupe de sous-canaux correspondant à un groupe de sous-porteuses.
